# DEMANDE DE BREVET EUROPEEN

(11) **EP 3 208 160 A1**
(43) Date de publication de la demande: **23.08.2017**
(21) Numéro de dépôt: 17154788.8
(22) Date de dépôt: 06.02.2017
(51) Int. Cl.: B60S 1/40

(54) **DISPOSITIF DE CONNEXION ADAPTABLE ENTRE UN BRAS DE MANOEUVRE ET UN BALAI D'ESSUYAGE D'UN PARE-BRISE DE VÉHICULE AUTOMOBILE**

(30) Priorité: 18.02.2016 FR 1651310
(71) Demandeur: Valeo Systèmes d'Essuyage, 78322 Le Mesnil Saint Denis (FR)
(72) Inventeur: MONEYRON, Patrick, 63670 LE CENDRE (FR); ESPINASSE, Philippe, 63114 COUDES (FR); TERRASSE, William, 63270 VIC LE COMTE (FR)
(74) Mandataire: Vincent, Catherine Marie Marguerite

(57) **Abrégé**

L'invention vise un connecteur 4 porteur d'un balai d'essuyage 2 d'une surface vitrée d'un véhicule automobile, apte à être rapporté sur une partie de connexion d'un bras de manoeuvre dudit balai d'essuyage 2, le bras de manoeuvre comprenant au moins un doigt et un capot 40 couvrant ladite partie de connexion, ledit connecteur 4 comprend au moins un plot 15 dans lequel est ménagé un logement apte à recevoir le doigt du bras de manoeuvre, caractérisé en ce que le plot 15 comprend au moins une gorge 30a adaptée à recevoir au moins une partie 43, 44 du capot 40.

## Description

Le domaine de la présente invention est celui des systèmes d'essuyage destinés à équiper un véhicule automobile. Elle a pour objet un connecteur porteur d'un balai d'essuyage d'une surface vitrée d'un véhicule automobile, apte à être rapporté sur une partie de connexion d'un bras de manoeuvre dudit balai d'essuyage. Elle a également pour objet un dispositif de connexion équipé d'un tel connecteur. L'invention porte aussi sur un balai d'essuyage équipé d'un tel dispositif de connexion. Elle porte encore sur un système d'essuyage comprenant un tel balai d'essuyage et un bras pour la manoeuvre d'un tel balai d'essuyage, reliés par un dispositif de connexion comprenant un tel connecteur.

Les véhicules automobiles sont couramment équipés d'un système d'essuyage pour assurer un balayage et un lavage d'un pare-brise et éviter que la vision qu'a le conducteur de son environnement ne soit perturbée. Ce système d'essuyage comprend un bras de manoeuvre qui est porteur d'un balai d'essuyage et qui effectue un mouvement de va-et-vient angulaire le long du pare-brise. Le balai d'essuyage est porteur d'une lame racleuse réalisée en une matière élastique. La lame racleuse frotte contre le pare-brise et évacue l'eau en l'amenant en dehors du champ de vision du conducteur. Le balai d'essuyage est réalisé sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai d'essuyage est rattaché au bras de manoeuvre par un dispositif de connexion interposé entre le bras de manoeuvre et le balai d'essuyage.

Le document de l'art antérieur FR2841852A1 montre un dispositif de connexion entre un bras d'entraînement et un balai d'essuyage. Une telle connexion est exposée aux conditions extérieures. Par ailleurs, cette connexion est particulièrement inesthétique. C'est pourquoi, il a été envisagé de couvrir cette connexion par l'ajout d'un capot recouvrant la liaison mécanique entre le bras de manoeuvre et le balai d'essuyage. Or, chaque constructeur automobile dispose de sa version spécifique de capot, d'autant plus que ce capot participe à distinguer la marque du constructeur automobile.

Le document de l'art antérieur FR2841852A1 ne divulgue pas un dispositif de connexion comportant un connecteur permettant d'accueillir différents types de capot, de conceptions différentes, notamment en raison du fait qu'ils proviennent par exemple, de constructeurs automobiles différents. Une telle situation complique la logistique et augmente les coûts de conception, de fabrication et de distribution des balais d'essuyage de deuxième monte concernés par ce type de connexion entre un bras d'entraînement et son balai d'essuyage.

De plus, un tel dispositif de connexion n'est pas adapté pour être aisément monté sur une gamme de véhicules automobiles comportant indifféremment une direction à droite ou bien une direction à gauche, c'est-à-dire un véhicule automobile dont un volant de direction est indifféremment installé d'un côté droit ou bien d'un côté gauche du véhicule automobile. Or, pour des raisons de production, de référencement et/ou de stockage, il est souhaitable de disposer d'un balai d'essuyage dont le montage est indifféremment possible sur un véhicule automobile comportant une direction à droite ou bien une direction à gauche, ce que ne prévoit pas le balai d'essuyage décrit par le document FR 2841852 A1.

Un but de la présente invention est de proposer un connecteur destiné à être interposé entre un bras de manoeuvre et un balai d'essuyage d'une surface vitrée du véhicule automobile, le connecteur est simple et adaptable à différents bras de manoeuvre pouvant comporter différents type de modèle de capot de couverture du dispositif de connexion. Le connecteur peut aisément être assemblé sur un véhicule automobile comportant indifféremment une direction à droite ou à gauche, pour offrir une visibilité optimisée à un conducteur du véhicule automobile.

A cet effet, on prévoit selon l'invention un connecteur porteur d'un balai d'essuyage d'une surface vitrée d'un véhicule automobile, apte à être rapporté sur une partie de connexion d'un bras de manoeuvre dudit balai d'essuyage, le bras de manoeuvre comprenant au moins un doigt et un capot couvrant ladite partie de connexion, ledit connecteur comprenant au moins un plot dans lequel est ménagé un logement apte à recevoir le doigt du bras de manoeuvre, caractérisé en ce que le plot comprend au moins une gorge adaptée à recevoir au moins une partie du capot. Selon un exemple de réalisation, la partie du capot peut notamment consister en un flanc de capot, c'est-à-dire une portion transversale à une partie du capot qui couvre la connexion.

Selon l'invention, le plot comprend un palier bordé par au moins une gorge.

Avantageusement, un logement est ménagé dans le palier.

Le palier est par exemple parallélépipédique.

Selon un aspect de l'invention, le plot comprend deux gorges, chacune ménagée de part et d'autre du palier, selon un axe longitudinal X du connecteur.

Préférentiellement, les deux gorges sont adaptées pour recevoir un flanc d'un premier capot.

Selon un aspect de l'invention, le palier est disposé au milieu du connecteur, selon l'axe longitudinal X du connecteur.

Selon un aspect de l'invention, il est prévu un dégagement localisé entre le plot et une extrémité longitudinale du connecteur, la gorge étant apte à recevoir un premier flanc d'un premier capot et le dégagement étant apte à recevoir un deuxième flanc du premier capot. Le dégagement est également conçu pour recevoir le deuxième capot, ce dernier se distinguant du premier capot par au moins une de ses dimensions, notamment sa longueur mesurée le long de l'axe longitudinal X.

Avantageusement, le dégagement est délimité par un plateau s'étendant d'une face longitudinale du plot et par un couvercle apte à couvrir une partie d'un déflecteur du balai d'essuyage.

Selon un aspect de l'invention, deux couples gorge/dégagement sont ménagés chacun de part et d'autre du palier.

Selon un aspect de l'invention, le couvercle est pourvu d'un rebord latéral apte à recouvrir le déflecteur et/ou la lame racleuse et/ou un élément de structure du balai d'essuyage.

Selon un aspect de l'invention, le logement comprend une rainure qui s'étend dans un plan médian du connecteur perpendiculaire à l'axe longitudinale du connecteur. Le plan médian forme ici un plan de symétrie transversal du connecteur.

Selon un aspect de l'invention, le logement est borgne. Il est ainsi délimité, sur une première face du palier, par un orifice d'entrée et est fermé par la deuxième face du palier.

Selon un aspect de l'invention, le connecteur est caractérisé en ce qu'il est monobloc.

Selon un aspect de l'invention, les deux extrémités longitudinales du connecteur comprennent un couvercle.

Ces dispositions sont telles que le connecteur est standardisé pour coopérer avec plusieurs types de capot appartenant à des véhicules différents.

L'invention a aussi pour objet un dispositif de connexion incorporant un connecteur tel que décrit précédemment et une partie de connexion d'un bras de manoeuvre d'un balai d'essuyage. Le dispositif de connexion est également simple, peu encombrant et comporte un nombre de pièces qui est le plus réduit possible. Le même dispositif de connexion est aisément assemblable sur un véhicule automobile comportant indifféremment une direction à droite ou bien une direction à gauche, pour offrir une visibilité optimisée à un conducteur du véhicule automobile.

L'invention porte également sur un balai d'essuyage équipé d'un connecteur tel que décrit dans le présent document.

L'invention porte enfin sur un système d'essuyage comprenant un balai d'essuyage équipé d'un connecteur tel que présenté dans ce document et d'un bras de manoeuvre comprenant une partie de connexion couverte par un premier capot ou par un deuxième capot coopérant avec ledit connecteur, le deuxième capot ayant au moins une dimension différente par rapport au premier capot.

Avantageusement, le premier capot et le deuxième capot comprennent chacun un premier flanc de capot et un deuxième flanc de capot, le premier flanc de capot et le deuxième flanc de capot étant transversaux à une portion de capot couvrant la partie de connexion, le premier flanc de capot ou le deuxième flanc de capot étant reçu dans une première gorge ou dans une deuxième gorge du connecteur ou dans un premier dégagement ou dans un deuxième dégagement du connecteur.

Lorsque le système d'essuyage est adapté pour un véhicule conduite à droite, le premier flanc du premier capot se loge dans la première gorge alors le deuxième flanc du premier capot se loge dans le deuxième dégagement.

Lorsque le système d'essuyage est adapté pour un véhicule conduite à gauche, le premier flanc du premier capot se loge dans la deuxième gorge alors le deuxième flanc du premier capot se loge dans le premier dégagement.

On notera que le premier flanc et le deuxième flan du deuxième capot se logent respectivement dans le premier dégagement et dans le deuxième dégagement, pour une conduite à droite et vice-et-versa pour une conduite à gauche.

D'autres caractéristiques, détails et avantages de l'invention ressortiront plus clairement à la lecture de la description donnée ci-après à titre indicatif en relation avec des dessins dans lesquels :
- la figure 1 est une vue générale de face d'un système d'essuyage selon l'invention ;
- la figure 2 est une vue en perspective du connecteur selon l'invention ;
- la figure 3 est une vue latérale du connecteur selon l'invention ;
- la figure 4 est une vue partielle, en perspective, du système d'essuyage illustré sur la figure 1 et comprenant un bras de manoeuvre et le connecteur selon l'invention ;
- la figure 5a est une vue de dessus du système d'essuyage illustré sur la figure 4 équipé du premier capot ; et
- la figure 5b est une vue de dessus du système d'essuyage illustré sur la figure 4 équipé du deuxième capot.

Il faut tout d'abord noter que les figures exposent l'invention de manière détaillée pour mettre en oeuvre l'invention, lesdites figures pouvant bien entendu servir à mieux définir l'invention le cas échéant.

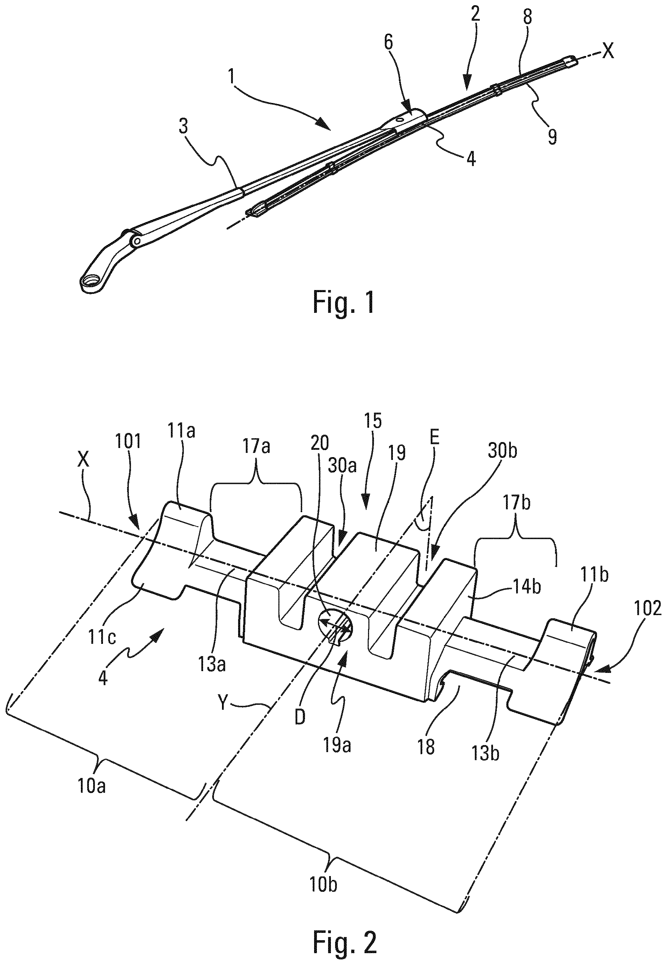

Sur les figures 1 à 5b, les dénominations longitudinale ou transversale, dessus, dessous, devant, derrière se réfèrent à l'orientation d'un balai d'essuyage 2 et/ou d'un connecteur 4 selon l'invention. Une direction longitudinale correspond à un axe longitudinal X selon lequel s'étend le balai d'essuyage 2 et correspondant également à un axe longitudinal selon lequel le connecteur 4 s'étend. Une direction transversale correspond à un axe transversal Y perpendiculaire à l'axe longitudinal X du connecteur 4. Pour les directions longitudinales, les dénominations « extérieure » ou intérieure s'apprécient par rapport à un point de pivotement du balai d'essuyage 2 sur un bras 3 de manoeuvre, la dénomination intérieure correspondant à la partie où le bras 3 de manoeuvre et un demi-balai d'essuyage s'étendent. Enfin, les directions référencées comme supérieures ou inférieures correspondent à des orientations perpendiculaires à un plan de rotation du balai d'essuyage 2, la dénomination inférieure contenant le plan d'une surface vitrée, par exemple un pare-brise.

Tel qu'illustré sur la figure 1, un véhicule automobile est couramment équipé d'un système d'essuyage 1 pour évacuer de l'eau et/ou du liquide lave-glace et/ou des salissures présentes sur une surface vitrée du véhicule automobile. Le système d'essuyage 1 comprend un bras 3 de manoeuvre qui est apte à effectuer un mouvement de va-et-vient angulaire le long et au-dessus du pare-brise. La surface vitrée est indifféremment un pare-brise avant ou une lunette arrière équipant le véhicule automobile. Dans la suite de la description, le pare-brise servira d'exemple de la surface vitrée.

Le véhicule automobile comporte indifféremment une direction à droite ou bien une direction à gauche. Le connecteur 4 de la présente invention trouve une partie de son intérêt pour un montage sur un véhicule automobile dont la direction est indifféremment à droite ou à gauche, tout en procurant une visibilité optimisée au conducteur du véhicule automobile.

Le balai d'essuyage 2 est équipé d'un connecteur 4 apte à être rapporté sur une partie de connexion 6 du bras 3 de manoeuvre dudit balai d'essuyage 2. Ce connecteur 4 assure une liaison mécanique entre le bras 3 de manoeuvre et le balai d'essuyage 2. Cette liaison rend amovible la connexion du balai d'essuyage 2 au bras 3 de manoeuvre. Ainsi, il est possible de séparer le balai d'essuyage 2 du bras 3 de manoeuvre, en vue d'un remplacement du balai d'essuyage 2.

Le balai d'essuyage 2 comprend au moins un déflecteur d'air 8 et une lame racleuse 9. Le déflecteur d'air 8 est prévu pour transformer une pression appliquée par un flux d'air circulant le long du pare-brise en une force d'appui du balai d'essuyage 2 contre le pare-brise du véhicule automobile. Le déflecteur d'air 8 peut être formé d'une pluralité de sous-déflecteurs distincts et rapportés de part et d'autre du connecteur 4. Alternativement, ce déflecteur d'air 6 peut être monobloc et constitué d'une seule et unique pièce qui s'étend d'une extrémité longitudinale à l'autre du balai d'essuyage 2. Dans une telle situation, le déflecteur d'air 8 peut présenter une découpe dans laquelle se loge le connecteur 4.

La lame racleuse 9 est la pièce du balai d'essuyage 2 en contact direct avec le pare-brise pour évacuer l'eau et/ou les salissures présentes sur ce dernier. Le déflecteur d'air 8 et la lame racleuse 9 forment un ensemble semi-rigide qui est porté par le connecteur 4.

Tel que représenté sur la figure 2, le connecteur 4 a une forme générale de baguette rectangulaire s'étendant longitudinalement selon l'axe longitudinal X.

Selon le mode de réalisation représenté dans les figures 2 à 4, le connecteur 4 est coupé par un plan médian E qui délimite notamment une première partie 10a et une deuxième partie 10b du connecteur 4. Les deux parties 10a, 10b sont images l'une de l'autre selon le plan médian E correspondant à un plan de symétrie perpendiculaire à l'axe longitudinale X et passant au centre du connecteur 4.

Selon l'invention, la première partie 10a et/ou la deuxième partie 10b du connecteur 4 comprennent au moins une gorge 30a, 30b et au moins un dégagement 17a, 17b. Dans le cas d'espèce, le connecteur 4 comprend deux couples chacun formé par une gorge et un dégagement. Le connecteur 4 comprend donc une première gorge 30a et une deuxième gorge 30b, ainsi qu'un premier dégagement 17a et un deuxième dégagement 17b, ces gorges et ces dégagements étant destiné à coopérer avec un flan d'un capot couvrant la connexion entre la partie de connexion 6 et le connecteur 4.

Chaque dégagement 17a, 17b est délimité par un plateau 13a, 13b et par un couvercle 11a, 11b, ce couvercle étant destiné à recouvrir en partie le déflecteur d'air 8.

Les termes « premier » et « second » employés dans la description ci-dessous sont affectés à des formes, éléments ou composants compris respectivement dans ou sur la première partie 10a et dans ou sur la deuxième partie 10b du connecteur 4.

Nous allons maintenant décrire l'invention portant sur le connecteur 4 en détaillant la première partie 10a du connecteur 4, cette description pouvant bien entendu être transposée pareillement à la deuxième partie 10b.

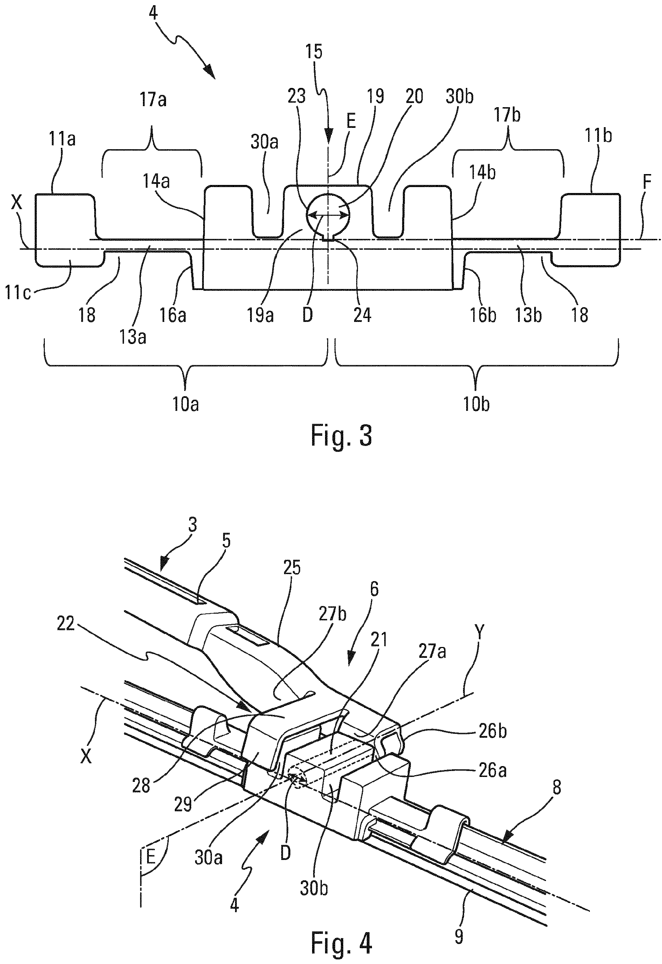

Tel qu'illustré sur les figures 2 et 3, le connecteur 4 comprend un premier couvercle 11a et un deuxième couvercle 11b à ses deux extrémités longitudinales 101, 102.

Le premier couvercle 11a coiffe une aile du déflecteur d'air 8. Ce premier couvercle 11a comporte des rebords latéraux 11c, 11d permettant de recouvrir latéralement la lame racleuse 9. En plus de recouvrir des éléments de structure du balai d'essuyage 2, le premier couvercle 11a est apte à réceptionner le déflecteur d'air 8 et éventuellement un élément de structure du balai d'essuyage 2, tel qu'une lame de rigidification autrement appelée vertèbre.

Par ailleurs, le premier couvercle 11a présente une section complémentaire avec la section du déflecteur d'air 8, limitant ainsi les perturbations aérauliques générées par des interstices entre ces pièces.

Selon un mode de réalisation, le premier couvercle 11a est venu de matière avec l'ensemble du connecteur 4. Selon une variante du mode de réalisation, le premier couvercle 11a peut-être rapporté au reste du connecteur 4.

Selon une vue d'ensemble, le connecteur 4 consiste en un plot 15, deux plateaux 13a, 13b et deux couvercles 11a, 11b.

Selon un aspect de l'invention, le connecteur 4 comprend un premier plateau 13a qui s'étend selon un plan de plateau F (visible sur la figure 3), parallèle à l'axe longitudinal X et par exemple parallèle à un plan dans lequel s'étendent certains éléments de structure du balai d'essuyage 2. Plus particulièrement, le premier plateau 13a s'étend entre le premier couvercle 11a d'extrémité et une première face longitudinale 14a du plot 15. Le premier plateau 13a est issu de la première face longitudinale 14a du plot 15 qui est parallèle au plan médian E du connecteur 4.

Tel que représenté sur les figures 2 et 3, le premier plateau 13a présente des bords latéraux 16a parallèles avec la première face longitudinale 14a du plot 15. On notera qu'une section du premier plateau 13a parallèle au plan médian E et pratiquée au niveau des bords latéraux 16a présente une forme en « U ». Ces bords latéraux 16a sont ménagés pour recouvrir partiellement et latéralement la lame racleuse 9 et/ou un élément de structure du balai d'essuyage 2. Le premier plateau 13a est configuré ainsi pour recouvrir partiellement une face supérieure de la lame racleuse 9 et/ou d'un élément de structure du balai d'essuyage 2 qui s'étend selon l'axe longitudinal X.

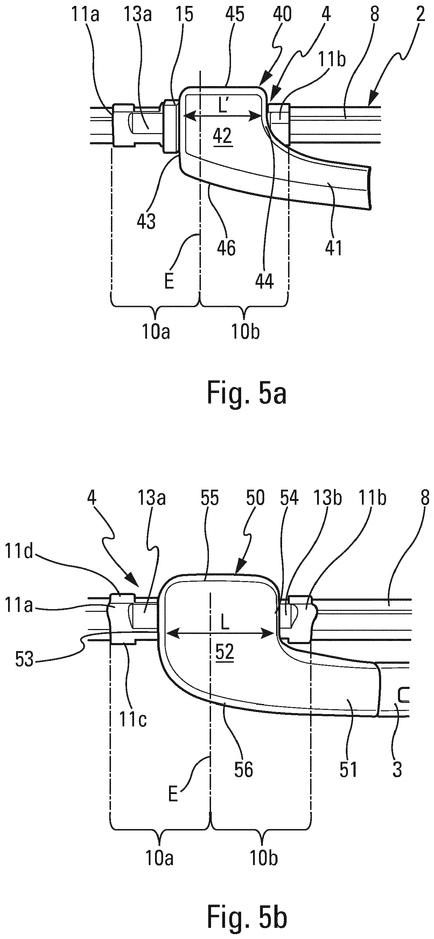

Avantageusement, une profondeur du premier dégagement 17a autorise le passage et la mise en place de pièces complémentaires du système d'essuyage 1, notamment d'une partie de capot 40, 50. Plus particulièrement, le premier dégagement 17a est agencé pour ne pas venir en interférence mécanique avec un flanc du capot, comme cela ressortira mieux de la description des figures 5a, 5b. De même, le premier plateau 13a présente au moins une zone de découpe 18 autorisant le montage sans interférence mécanique de différents modèles de capot 40, 50 au connecteur 4. La zone de découpe 18 est ménagée sur un bord latéral qui s'étend longitudinalement le long du premier plateau 13a. Selon une variante de l'invention, le connecteur 4 comportent deux bords longitudinaux du premier plateau 13a. Le connecteur 4 comprend alors deux zones de découpe par plateau. Lorsque l'on considère les deux parties symétriques, le connecteur 4 comprend ainsi quatre zones de découpe.

Tel que représenté sur les figures 2 et 3, le plot 15 du connecteur 4 comprend au moins une première gorge 30a et un palier 19.

Selon le mode de réalisation illustré, la première partie 10a et la deuxième partie 10b du connecteur 4 comprennent respectivement une première gorge 30a et une deuxième gorge 30b. Au moins l'une de ces gorges, et avantageusement les deux, est un évidement formé dans le plot 15. La première gorge 30a est dimensionnée pour recevoir une partie du capot 40, 50, notamment de par sa profondeur mesurée le long d'une droite parallèle au plan médian E et coupant le fond de la gorge.

Le palier 19 est formé dans le plot 15. Le palier 19 est ainsi délimité du côté de la première partie 10a de connecteur par la première gorge 30a, et du côté de la deuxième partie 10b du connecteur, par la deuxième gorge 30b.La première gorge 30a délimite le palier 19 compris dans le plot 15 dans la première partie 10a du connecteur 4.

Le palier 19 est préférentiellement parallélépipédique. Autrement dit, le palier 19 forme un volume comportant six faces qui sont formées de parallélogrammes. Le palier 19 est notamment disposé au milieu du plot 15 et du connecteur 4 selon l'axe longitudinal X. La première gorge 30a et la deuxième gorge 30b sont disposées de part d'autre du palier 19 dans le plot 15, délimitant ainsi le palier 19. Le palier 19 est donc centré sur le plan médian E et se trouve à la jonction des deux parties symétriques 10a, 10b du connecteur 4.

Selon une variante de réalisation, le palier 19 peut être décalé par rapport à un tel milieu du connecteur 4, selon l'axe longitudinal X. Dans ce cas, le plot 15 et le palier 19 sont décentrés longitudinalement selon l'axe X.

Le palier 19 est avantageusement pourvu d'un logement 20 apte à réceptionner un doigt 21 de la partie de connexion 6 du bras 3 de manoeuvre. Le logement 20 s'étend selon un axe transversal Y, orthogonale à l'axe longitudinal X. Selon une variante de réalisation, l'axe transversal Y s'inscrit dans le plan médian E.

Comme illustré par la figure 4, le logement 20 est configuré en un cylindre de diamètre D apte à recevoir le doigt 21 de la partie de connexion 6 du bras 3 de manoeuvre. Le doigt 21 et le logement 20 ont une forme complémentaire autorisant la libre rotation autour de l'axe transversal Y du connecteur 4 par rapport à la partie de connexion 6. La rotation peut être limitée par la présence d'une broche 22 qui est un élément de la partie de connexion 6.

En se reportant aux figures 2 et 3, on constate que le logement 20 est débouchant sur la première face 19a du connecteur 4, par le biais d'un orifice 23. Avantageusement, le doigt 21 est apte à être inséré dans le logement 20 grâce à l'orifice 23.

Selon un exemple de réalisation, le logement 20 peut être borgne. Le logement 20 est configuré pour être non-débouchant sur la deuxième face du connecteur 4. La présence d'un seul orifice 23 à l'avantage d'écarter tout risque de montage à l'envers du balai d'essuyage 2 sur le bras 3 de manoeuvre. On garantit ainsi que le balai d'essuyage 2 est correctement positionné quand celui-ci est équipé d'un déflecteur d'air 8 asymétrique.

Le doigt 21 participe à la correcte mise en place de la partie de connexion 6 et au verrouillage de cette dernière au connecteur 4 porteur du balai d'essuyage 2.

Le palier 19 comprend également une rainure 24 qui s'étend le long de l'axe transversal Y. Cette rainure 24 est ouverte sur le logement 20. La rainure 24 s'étend préférentiellement selon le plan médian E du connecteur 4. Cette rainure 24 permet, lors de l'insertion du doigt 21 dans le logement 20, l'évacuation d'air ou de liquide pouvant empêcher la correcte mise en place du doigt 21 dans le logement 20.

La figure 4 représente la partie de connexion 6 portée par le bras 3 de manoeuvre et coopérant avec le connecteur 4 porteur du balai d'essuyage 2.

La partie de connexion 6 peut notamment être rapportée à une extrémité d'une tige 5 constitutive du bras 3 de manoeuvre. La partie de connexion 6 peut comprendre un corps 25 au bout duquel sont ménagées deux ailettes 26a, 26b, parallèles l'une à l'autre et qui s'étendent dans le prolongement du corps 25. Plus particulièrement, une première ailette 26a comporte une première face 27a et le corps 25 comporte une deuxième face 27b, la première face 27a et la deuxième face 27b étant ménagées parallèlement l'une à l'autre. Plus particulièrement encore, la première face 27a et la deuxième face 27b sont ménagées dans le prolongement l'une de l'autre et parallèlement à l'axe longitudinal X du connecteur 4.

La partie de connexion 6 du bras 3 de manoeuvre comprend le doigt 21 et la broche 22 qui sont ménagés respectivement selon l'axe transversal Y et parallèle à l'axe transversal Y, c'est-à-dire transversale et perpendiculaire à l'axe longitudinal X. Le doigt 21 est configuré en un cylindre d'un diamètre D'. La broche 22 s'étend perpendiculairement à la première ailette 26a du corps 25. La broche 22 comprend une patte 28 et une languette 29, cette dernière s'étendant dans un plan perpendiculaire, ou sensiblement perpendiculaire, à un plan passant par la patte 28. La broche 22 est située entre la première face 27a et la deuxième face 27b de la première ailette 26a. La languette 29 est ménagée sensiblement parallèlement à la première ailette 26a.

La broche 22 participe au verrouillage de la partie de connexion 6 du bras 3 de manoeuvre au connecteur 4 porteur du balai d'essuyage 2.

Tel qu'illustré sur la figure 4, le plot 15 est partiellement recouvert par la broche 22 comprenant la patte 28 et la languette 29. De manière plus précise, on note que la broche 22 peut couvrir la portion du plot 15 qui est située entre la première gorge 30a et l'extrémité longitudinale du plot 15. On notera que la deuxième gorge 30b reste libre pour autoriser le passage du flanc du capot 40, 50, même si le balai d'essuyage 2 est relié au bras 3 de manoeuvre.

La partie de connexion 6 du bras 3 de manoeuvre est recouverte du capot 40, 50 visible sur les figures 5a et 5b.

Les figures 5a et 5b représentent deux modes de réalisation différents. Ces deux modes de réalisation diffèrent en ce que la configuration du capot 40, 50 destinée à recouvrir la partie de connexion 6 diffère du point de vue des dimensions. Il s'agit ici de deux modèles de capot 40, 50. Le deuxième capot 50 représenté sur la figure 5b est, selon l'axe longitudinale X, d'une longueur L supérieure à une longueur L' du premier capot 50 représenté sur la figure 5a.

Ces différents modèles de capot 40, 50 sont adaptables au connecteur 4 selon l'invention.

La figure 5a représente le premier capot 40 recouvrant en partie le connecteur 4, notamment en recouvrant intégralement le deuxième plateau 13b et partiellement le plot 15. La figure 5b représente le deuxième capot 50 recouvrant en partie le connecteur 4, notamment en recouvrant le plot 15 dans son ensemble. Les capots de ces deux modes de réalisation sont de conception similaire. En revanche, il diffère au moins par leurs longueurs, mesurées selon l'axe longitudinal X du connecteur 4, entre un premier flanc de capot et un deuxième flanc de capot.

Nous allons maintenant décrire la partie commune à ces deux capots. Le capot 40, 50 a une forme générale en « L » selon laquelle une partie du capot 40, 50 recouvre avec une première partie 41, 51 le bras 3 de manoeuvre, et une deuxième partie recouvre longitudinalement et latéralement en partie le connecteur 4. Cette deuxième partie forme une portion 42, 52 de capot qui couvre la partie de connexion 6. On comprend ici que cette portion 42, 52 s'étend dans un plan sensiblement parallèle au plan de plateau F illustré à la figure 3. On notera que le premier flanc 43 du premier capot 40 ou le premier flanc 53 du deuxième capot 50 sont transversaux, et avantageusement perpendiculaire, à la portion 42 du premier capot 40 qui couvre la partie de connexion 6. De manière complémentaire ou alternative, le deuxième flanc 44 du premier capot 40 et le deuxième flanc 54 du deuxième capot 50 s'étendent dans des plans transversaux au plan d'extension de la portion 52 du deuxième capot 50 qui couvre la partie de connexion 6.

Le premier capot 40 ou le deuxième capot 50 présente chacun deux flancs 43, 53, 44, 54 qui s'étendent transversalement à l'axe longitudinal X du connecteur 4. Ces flancs participent à la bonne mise en place du capot 40, 50 sur le connecteur 4. Le premier capot 40 et le deuxième capot 50 comprennent un premier flanc 43, 53 et un deuxième flanc 44, 54, ainsi que deux parois latérales 45, 55 et 46, 56 qui s'étendent longitudinalement selon l'axe longitudinal X.

Le premier flanc 43, 53 est parallèle au deuxième flanc 44, 54. Ces flancs relient les parois latérales 45, 46, 55, 56 de chaque capot 40, 50.

Nous allons maintenant décrire les spécificités des deux modes de réalisation représentés sur les figures 5a et 5b. Le mode de réalisation de la figure 5a représente une première variante de réalisation, selon laquelle le premier capot 40 est mis en place par insertion du premier flanc 43 du premier capot 40 dans la première gorge 30a de la première partie 10a du connecteur 4, et par l'insertion du deuxième flanc 44 du premier capot 40 dans le deuxième dégagement 17b de la deuxième partie 10b du connecteur 4. Cette disposition est conforme pour un véhicule dont la conduite est à droite.

Lorsque le système d'essuyage est adapté à un véhicule conduite à gauche, le premier capot 40 est apte également à être mis en place sur le connecteur 4. Dans un tel cas, le premier flanc 43 du premier capot 40 est inséré dans la deuxième gorge 30b de la deuxième partie 10b du connecteur 4, et le deuxième flanc 44 est inséré dans le premier dégagement 17a de la première partie 10a du connecteur 4.

Le mode de réalisation de la figure 5b représente une deuxième variante de réalisation, selon laquelle le deuxième capot 50 est mis en place par l'insertion du premier flanc 53 du deuxième capot 50 dans le premier dégagement 17a de la première partie 10a du connecteur 4, et par l'insertion du deuxième flanc 54 du deuxième capot 50 dans le deuxième dégagement 17b de la deuxième partie 10b du connecteur 4. Le plot 19 est ainsi entièrement recouvert par le deuxième capot 50. Cette disposition est conforme pour un véhicule est adapté à la conduite à droite.

Lorsque le système d'essuyage est adapté pour un véhicule conduite à gauche, le deuxième capot 50 est apte également à être mis en place sur le connecteur 4. Le premier flanc 53 et le deuxième flanc 54 du deuxième capot 50 sont respectivement disposés dans le deuxième dégagement 17b et dans le premier dégagement 17a du connecteur 4.

Avantageusement, le connecteur 4 selon l'invention est apte à autoriser la mise en place de plusieurs modèles de capot couvrant un bras de manoeuvre, notamment de constructeurs automobiles différents.

Le connecteur selon l'invention, grâce à la présence d'au moins une gorge astucieusement placée, permet de recevoir un capot qui recouvre la partie de connexion entre le bras de manoeuvre et le balai d'essuyage.

## Revendications

1. Connecteur (4) porteur d'un balai d'essuyage (2) d'une surface vitrée d'un véhicule automobile, apte à être rapporté sur une partie de connexion (6) d'un bras (3) de manoeuvre dudit balai d'essuyage (2), le bras (3) de manoeuvre comprenant au moins un doigt (21) et un capot (40, 50) couvrant ladite partie de connexion (6), ledit connecteur (4) comprend au moins un plot (15) dans lequel est ménagé un logement (20) apte à recevoir le doigt (13) du bras (3) de manoeuvre, **caractérisé en ce que** le plot (15) comprend au moins une gorge (30a, 30b) adaptée à recevoir au moins une partie (43, 44) du capot (40).

2. Connecteur (4) selon la revendication 1, dans lequel la gorge (30a, 30b) délimite un palier (19) où est ménagé le logement (20).

3. Connecteur (4) selon la revendication 1 ou 2, dans lequel le plot (15) comprend deux gorges (30a, 30b) chacune ménagées de part et d'autre du palier (19), selon un axe longitudinal (X) du connecteur (4).

4. Connecteur (4) selon la revendication 3, dans lequel les deux gorges (30a, 30b) sont chacune adaptées pour recevoir un flanc (43, 44) du capot (40).

5. Connecteur (4) selon l'une quelconque des revendications précédentes, dans lequel est prévu au moins un dégagement (17a, 17b) localisé entre le plot (15) et une extrémité longitudinale (101, 102) du connecteur (4), la au moins une gorge (30a, 30b) étant apte à recevoir un premier flanc (43) d'un premier capot (40) et le dégagement (17a, 17b) étant apte à recevoir un deuxième flanc (44) du premier capot (40).

6. Connecteur (4) selon la revendication précédente, comprenant deux dégagements (17a, 17b) chacun ménagés de part et d'autre du palier (19), selon un axe longitudinal (X) du connecteur (4).

7. Connecteur (4) selon la revendication 5 ou 6, dans lequel le dégagement (17a, 17b) est délimité par un plateau (13a, 13b) s'étendant d'une face longitudinale (14a, 14b) du plot (15) et par un couvercle (11a, 11b) apte à couvrir une partie d'un déflecteur d'air (8) du balai d'essuyage (2).

8. Connecteur (4) selon l'une quelconque des revendications 5 à 7 en combinaison avec la revendication 2, dans lequel deux couples gorge/dégagement sont ménagés chacun de part et d'autre du palier (19).

9. Connecteur (4) selon l'une quelconque des revendications précédentes, **caractérisé en ce qu'**il est monobloc.

10. Balai d'essuyage (2) équipé d'un connecteur (4) selon l'une quelconque des revendications précédentes.

11. Système d'essuyage (1) comprenant un balai d'essuyage (2) équipé d'un connecteur (4) selon l'une quelconque des revendications 1 à 9 et d'un bras (3) de manoeuvre comprenant une partie de connexion (6) couverte par un premier capot (40) ou par un deuxième capot (50) coopérant avec ledit connecteur (4), le deuxième capot (50) ayant au moins une dimension différente par rapport au premier capot (40).

12. Système d'essuyage (1) selon la revendication précédente, selon lequel le premier capot (40) et le deuxième capot (50) comprennent chacun un premier flanc (43, 53) de capot et un deuxième flanc (44, 54) de capot, le premier flanc (43, 53) et le deuxième flanc (44, 54) étant transversaux par rapport à une portion (42, 52) de capot couvrant la partie de connexion (6), le premier flanc (43, 53) ou le deuxième flanc (44, 54) étant reçu dans une première gorge (30a) ou dans une deuxième gorge (30b) du connecteur (4) ou dans un premier dégagement (17a) ou dans un deuxième dégagement (17b) du connecteur (4).

13. Système d'essuyage (1) selon la revendication 12 adapté pour un véhicule conduite à droite, dans lequel le premier flanc (43) du premier capot (40) se loge dans la première gorge (30a) alors le deuxième flanc (44) du premier capot (40) se loge dans le deuxième dégagement (17b).

14. Système d'essuyage (1) selon la revendication 12 adapté pour un véhicule conduite à gauche, dans lequel le premier flanc (43) du premier capot (40) se loge dans la deuxième gorge (30b) alors le deuxième flanc (44) du premier capot (40) se loge dans le premier dégagement (17a).

15. Système d'essuyage (1) selon la revendication 12, dans lequel le premier flanc (53) et le deuxième flan (54) du deuxième capot (50) se logent respectivement dans le premier dégagement (17a) et dans le deuxième dégagement (17b).
